# EUROPEAN PATENT SPECIFICATION

(11) **EP 2 722 311 B1**
(45) Date of publication and mention of the grant of the patent: **06.03.2019**
(21) Application number: 13189530.2
(22) Date of filing: 21.10.2013
(51) Int. Cl.: C01B 33/158, C01B 33/16

(54) **Silica aerogel powder manufacturing system and processing method**
Siliziumdioxid-Aerogelpulver-Herstellungssystem und Verarbeitungsverfahren
Système de fabrication de poudre d'aérogel de silice et procédé de préparation

(30) Priority: 22.10.2012 KR 20120117235
(43) Date of publication of application: 23.04.2014
(73) Proprietor: Jios Aerogel Limited, Hong Kong (HK)
(72) Inventor: Joung, Young Chul, 445-160 Gyeonggi-do (KR); Roh, Myung Je, 140-748 Seoul (KR); Park, Jong Chul, 447-746 Gyeonggi-do (KR); Kim, Min Woo, 301-774 Daejeon (KR); Lee, Mun Hyeong, 447-140 Gyeonggi-do (KR); Hahn, Choon Soo, 595-881 Jeollabuk-do (KR)
(74) Representative: dompatent von Kreisler Selting Werner - Partnerschaft von Patent- und Rechtsanwälten mbB

(56) References cited:
- WO-A1-2008/143384
- WO-A1-2009/041752
- US-A- 2 483 868
- US-A- 2 871 099
- US-A1- 2012 225 003

## Description

### [Technical Field]

The present invention relates to a silica aerogel powder manufacturing system and technique, and more specifically, to a silica aerogel powder manufacturing system and technique capable of continuously performing the whole manufacturing process including raw material supply, synthesis, drying, collection, and the like.

### [Background of the Invention]

A silica aerogel having a chemical formula SiO₂ may be used for desiccants, catalyst supports, adiabatic materials, insulating materials, and the like, as an amorphous particle in which water and the like, which are solvents, are inserted between silicic acid (SiO₂) particles of a nano-porous structure having a porosity of 90% or higher and a specific surface area of 600 m²/g or higher, thus becoming solid.

However, many risky factors are involved in a manufacturing process thereof, and the manufacturing process is complex, and thus, there is a disadvantage in terms of manufacturing costs. Therefore, the actual use of silica aerogel is very limited, and specifically, in a manufacturing system for continuously performing the whole manufacturing process including raw material supply, synthesis, drying, collection, and the like, the manufacturing process is complex, and also an intermediate product in each processing stage is not sufficiently stable to be stored, and productivity is lowered due to a severe imbalance in a time required for each process. Thus, there is an urgent need to develop a technique to deal with such risky factors.
In WO 2009/041752 A1 art relating to a method of fabricating a silica aerogel powder is disclosed.

### [Description of the Invention]

### [Problems to be Solved]

The present invention provides a silica aerogel powder manufacturing system and method for not only continuously performing the whole manufacturing process including supply of raw materials, such as de-ionized water, water glass, an organosilane compound, an inorganic acid, an organic solvent, and the like, synthesis, drying, collection, and the like, but also dramatically improving manufacturing productivity and simplifying production management by solving a productivity decrease problem due to a severe imbalance in a time required for each process.

### [Means for Solving Problems]

According to an aspect of the present invention, there is provided a system for manufacturing silica aerogel powder, the system including: a raw material supply unit for supplying raw materials, being de-ionized water, water glass, hexamethyldisilazane (HMDS) as organosilane compound, nitric acid (HNO₃) as inorganic acid and a non-polar organic solvent; a mixing unit for performing a gelling process; a solvent substitution unit for performing a solvent substitution process; a gel supply unit for storing water removed solvent substitution completed silica gel for a predetermined time without being concerned about self-reaction or deformation of materials to be reacted and stably supplying the solvent substitution completed silica gel to a drying unit; the drying unit for generating silica aerogel powder through a drying process; a collection unit for collecting and obtaining the silica aerogel powder; a recollection unit for recollecting raw materials vaporized by the mixing unit and the drying unit; a thermal boiler unit or a heater unit for transferring heat to the mixing unit and the drying unit; and a waste liquid tank for storing a waste liquid.

The raw material supply unit may mix some raw materials supplied from each of raw material barrels by a diaphragm pump, and transfer the mixed raw materials to the mixing unit, transfer other raw materials to the mixing unit as they are, and include: a first stirring machine for generating a water glass solution by mixing the de-ionized water and the water glass in a predetermined ratio; a second stirring machine for mixing two or more types of organic solvents when the organic solvents are input; a first storage tank having a first load cell for measuring the inflow of the organosilane compound; a second storage tank having a second load cell for measuring the inflow of the inorganic acid; and the like, wherein the materials are transferred to the mixing unit according to a predetermined order.

The mixing unit may include a mixing tank, a heating device such as a thermal heater, a temperature sensor, a stirring machine rotating by motor driving, and the like, and may generate silica hydrogel through a gelling process of a synthesis reaction by mixing raw materials supplied from the raw material supply unit.

The solvent substitution unit may include a solvent substitution reaction tank, a checking window for checking layer separation due to solvent substitution, a stirring machine rotating by motor driving, a transfer pump, and the like, and solvent-substitute silica hydrogel supplied from the mixing unit, and may transfer the solvent substitution completed gel to the gel supply unit.

The gel supply unit may include a gel buffer tank, a checking window for checking a height and a state of stored gel, a stirring machine rotating by motor driving, a height-adjustable vertical-type gel discharge pipe, a waste liquid discharge pipe, a transfer pump, a flow meter, and the like, receive the solvent substitution completed gel, discharge water, and store the gel for a predetermined time or supply the gel to the drying unit.

The drying unit may include a drying tank, a heating device such as a thermal heater, a temperature sensor, a stirring machine rotating by motor driving and made of a Teflon material at a portion contacting the drying tank, a filter for filtering vaporized raw materials, and the like, and may discharge the silica aerogel to the collection unit for collecting the silica aerogel.

The recollection unit may include a recollection storage tank, a vacuum pump, a chiller, a condenser, and the like, and may recollect the organic solvent from the raw materials vaporized by the drying unit.

According to another aspect of the present invention, there is provided a method of manufacturing silica aerogel powder by using de-ionized water, water glass, hexamethyldisilazane (HMDS) as organosilane compound, nitric acid (HNO₃) as inorganic acid, and a non-polar organic solvent as raw materials, the method including: a raw material supplying operation of supplying each of the materials to a mixing unit according to a predetermined order by using a diaphragm pump of each raw material tank; a gelling operation of generating silica hydrogel in a gelling process of mixing and reacting the raw materials supplied from a raw material supply unit; a solvent substituting operation of solvent-substituting the silica hydrogel supplied from the mixing unit; a gel storing and supplying operation of receiving the water-removed solvent substitution completed gel, discharging water, and storing the gel for a predetermined time without being concerned about self-reaction or deformation of materials to be reacted or supplying the gel to a drying unit; a drying operation of receiving the gel and generating silica aerogel; a collecting operation of collecting the silica aerogel; and an organic solvent recollecting operation of recollecting the organic solvent from raw materials vaporized by the mixing unit and the drying unit.

### [Effects of the Invention]

As described above, the system and method for manufacturing silica aerogel powder may automatically and continuously perform supplying of raw materials, a synthesis and reaction process of the raw materials, a drying process, and a collection process, and thus, a large quantity of silica aerogel powder may be produced, and this is very significant in view of economy and industry.

Specifically, the synthesis and reaction process is segmented into a gelling process and a solvent substitution process, and a gel storage and supply process is additionally performed to store water-removed solvent-substituted gel for a predetermined time without being concerned about self-reaction or deformation of materials to be reacted, and to supply the gel to a drying process according to circumstances, and accordingly, a problem of a decrease in productivity due to a process imbalance between a synthesizing and reacting operation and a drying operation is solved, thereby resulting in a dramatic increase in productivity and simplified production management of a silica aerogel powder manufacturing process.

In addition, by recollecting and condensing a solvent used in the silica aerogel powder manufacturing process and reusing the recollected solvent in a necessary process, raw materials may be saved.

### [Brief Description of the Drawings]

The above and other features and advantages of the present invention will become more apparent by describing in detail exemplary embodiments thereof with reference to the attached drawings in which:
FIG. 1 is a block diagram of a system for manufacturing silica aerogel powder according to an embodiment of the present invention;
FIG. 2 is a conceptual diagram of a mixing unit according to an embodiment of the present invention;
FIG. 3 is a front view of a solvent substitution unit according to an embodiment of the present invention;
FIG. 4 is a front view of a gel supply unit according to an embodiment of the present invention; and
FIG. 5 is a conceptual diagram of a drying unit according to an embodiment of the present invention.

### [Detailed Description for Carrying out the Invention]

The present invention may allow various kinds of changes or modifications and various changes in form, and specific embodiments will be illustrated in drawings and described in detail in the specification.

In the following description, although many items, such as components of a specific circuit, are shown, they are only provided to help with the general understanding of the present invention, and it will be understood by those of ordinary skill in the art that the present invention may be implemented without these specific items. In the following description, well-known functions or constructions will not be described in detail so as not to obscure the invention with unnecessary detail.

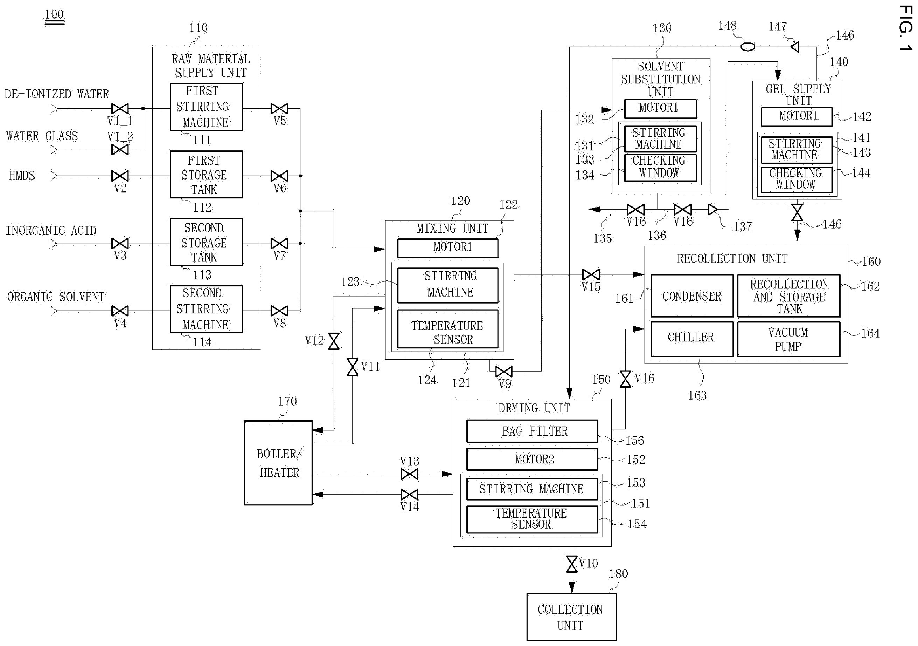

FIG. 1 is a block diagram of a system for manufacturing silica aerogel powder according to an embodiment of the present invention, wherein the system includes a raw material supply unit 110, a mixing unit 120, a solvent substitution unit 130, a gel supply unit 140, a drying unit 150, a recollection unit 160, a boiler/heater 170, and a collection unit 180.

The raw material supply unit 110 mixes some raw materials, such as de-ionized water, water glass, organosilane compound, inorganic acid, and organic solvent and transfers the mixed raw materials to the mixing unit 120, transfers other materials to the mixing unit 120 as they are, and includes a first stirring machine 111, a second stirring machine 114, a first storage tank 112, and a second storage tank 113.

The first stirring machine 111 generates a water glass solution by mixing the de-ionized water and the water glass at a predetermined ratio, wherein the de-ionized water refers to water from which ions, such as magnesium ions (Mg+), calcium ions (Ca+), and the like, included in water are mostly removed, and the water glass refers to a thick solution of sodium silicate (in a liquid phase) obtained by dissolving a silicon dioxide and alkali and may be obtained by melting a mixture of silica sands and soda ashes at about 1300°C to about 1500°C and processing the melted mixture in a low-pressure steam pot. The de-ionized water and the water glass are stored in corresponding storage containers (not shown), respectively, each of the storage containers is connected to the first stirring machine 111 through a connection pipe, and two first control valves V1_1 and V1_2 are respectively mounted in the middle of the connection pipes so that supplying of the de-ionized water and the water glass to the first stirring machine 111 and inflow amounts of the de-ionized water and the water glass may be adjusted by controlling the opening/closing of the two first control valves V1_1 and V1_2. The first stirring machine 111 is connected to the mixing unit 120 through a connection pipe, and a fifth valve V5 is mounted in the middle of the connection pipe so that transferring of the water glass solution mixed by the first stirring machine 111 to the mixing unit 120 and a transferring amount of the water glass solution may be adjusted by controlling the opening/closing of the fifth valve V5.

At least one type of organic solvent is supplied into the second stirring machine 114, and when one type of organic solvent is supplied into the second stirring machine 114, the organic solvent is transferred to the mixing unit 120 as it is, but when a plurality of organic solvents are supplied into the second stirring machine 114, a mixed liquid obtained by mixing the plurality of organic solvents is transferred to the mixing unit 120. The organic solvent is also stored in a corresponding storage container (not shown), and the corresponding storage container is connected to the second stirring machine 114 through a connection pipe, and a fourth valve V4 is mounted in the middle of the connection pipe. FIG. 1 shows that only one organic solvent is transferred, and thus, the number of connection pipes is 1, and the number of valves is also 1, but when a plurality of organic solvents are used, the same numbers of storage containers, connection pipes, and valves are used. Transferring of the organic solvent to the second stirring machine 114 and an amount of the organic solvent to be transferred may be adjusted by controlling the opening/closing of the fourth valve V4. The second stirring machine 114 is connected to the mixing unit 120 through a connection pipe, and an eighth valve V8 is mounted in the middle of the connection pipe. Types and an amount of organic solvents to be transferred to the mixing unit 120 are adjusted by controlling the opening/closing of the eighth valve V8. Herein the organic solvents refer to non-polar organic solvents, such as an n-hexane solution, an n-heptane solution, toluene, and xylene.

The first storage tank 112 including a first load cell stores the organosilane compound, i.e., hexamethyldisilazane (HMDS), to be transferred to the mixing unit 120. A load cell is a weight measuring device used in an electronic scale which displays the weight as digits. The organosilane compound (HMDS) is also a storage container (not shown), the organosilane compound storage container is connected to the first storage tank 112 through a connection pipe, and a second valve V2 is mounted in the middle of the connection pipe. Therefore, transferring of the organosilane compound (HMDS) to the first storage tank 112 and a transferring amount of the organosilane compound (HMDS) may be adjusted by controlling the opening/closing of the second valve V2. The first storage tank 112 is connected to the mixing unit 120 through a connection pipe, and a sixth valve V6 is mounted in the middle of the connection pipe. Transferring of the organosilane compound stored in the first storage tank 112 to the mixing unit 120 and a transferring amount of the organosilane compound may be adjusted by controlling the opening/closing of the sixth valve V6.

The second storage tank 113 including a second load cell stores the inorganic acid to be transferred to the mixing unit 120. Herein, the inorganic acid may be nitric acid (HNO₃) and is stored in a inorganic acid storage container (not shown), the inorganic acid storage container is connected to the second storage tank 113 through a connection pipe, and a third valve V3 is mounted in the middle of the connection pipe. Therefore, transferring of the inorganic acid to the second storage tank 113 and a transferring amount of the inorganic acid may be adjusted by controlling the opening/closing of the third valve V3. The second storage tank 113 is connected to the mixing unit 120 through a connection pipe, and a seventh valve V7 is mounted in the middle of the connection pipe. Transferring of the inorganic acid stored in the second storage tank 113 to the mixing unit 120 and a transferring amount of the inorganic acid may be adjusted by controlling the opening/closing of the seventh valve V7.

Although each of the first load cell 112 and the second load cell 113 is described as a weight measuring device, each of the first load cell 112 and the second load cell 113 actually also includes the concept of a storage tank including a load cell. That is, the first load cell 112 and the second load cell 113 measure an amount of raw materials supplied into and stored in respective storage tanks and transfer the stored raw materials to the mixing unit 120 through respective connection pipes.

Although not shown in FIG. 1, when the physical and chemical properties of various types of raw materials and the life span of parts inside pumps are considered, the raw materials stored in the storage containers may be transferred to the mixing unit 120 by using diaphragm pumps using pipes made of a SUS material and coated with Teflon.

An order of the raw materials to be supplied to the mixing unit 120 is controlled according to a preset order by a control unit (not shown). A mixing order of the raw materials is set by considering chemical reaction stability of the raw materials to be mixed and the like.

The mixing unit 120 generates silica hydrogel by mixing the raw materials transferred from the raw material supply unit 110 and includes a mixing tank 121, a stirring machine 123 having a plurality of stirring fans coupled to a stirring shaft that is rotated by driving of a motor 122, a temperature sensor 124 for measuring an internal temperature, and a heating device 125 including a thermal heater. Specifically, the mixing tank 121 has a vacant space between an inner wall and an outer wall, wherein thermal oil or hot air is transferred through the vacant space to adjust a temperature of the mixing tank 121, and the thermal oil or hot air which has finished a heating function is recollected by the boiler/heater 170 again. The mixing unit 120 is connected to the solvent substitution unit 130 through a connection pipe, and the silica hydrogel generated by the mixing unit 120 is transferred to the solvent substitution unit 130 by controlling the opening/closing of a ninth valve V9 mounted in the middle of the connection pipe.

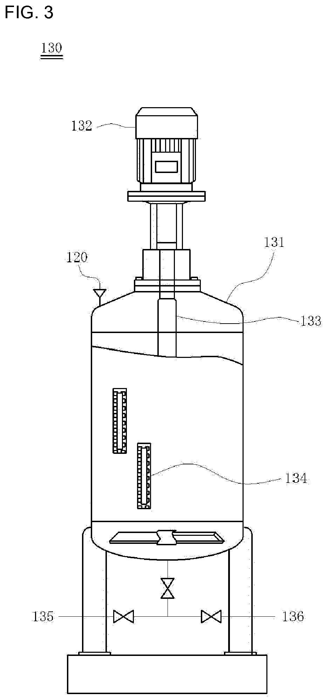

The solvent substitution unit 130 performs a solvent substitution process on the silica hydrogel, which has undergone a gelling process, transferred together with the organic solvent from the mixing unit 120, by using a stirring machine 133, and includes a solvent substitution tank 131, the stirring machine 133 rotating by driving of a motor 132, a checking window 134 for checking the inside of the solvent substitution tank 131, a waste liquid discharge pipe 135, a gel discharge pipe 136, a transfer pump 137, and the like as shown in FIG. 3. Like the mixing unit 120, the motor 132 is mounted on the top of the solvent substitution unit 130, and stirring is performed at a predetermined speed by the stirring machine 133. After completing the solvent substitution process, solvent substitution completed silica gel is transferred to the gel supply unit 140 through the transfer pump 137 and the gel discharge pipe 136, which are mounted on the bottom of the solvent substitution unit 130. Specifically, whether a gelling reaction in the mixing unit 120 has been normally performed can be checked through the checking window 134 based on layer separation due to the solvent substitution, and if the gelling process has not been normally performed for some reason, the solvent substitution process is not performed, and in this case, the result is transferred to a waste liquid tank (not shown) through a separate waste liquid pipe 135 and is discharged as waste.

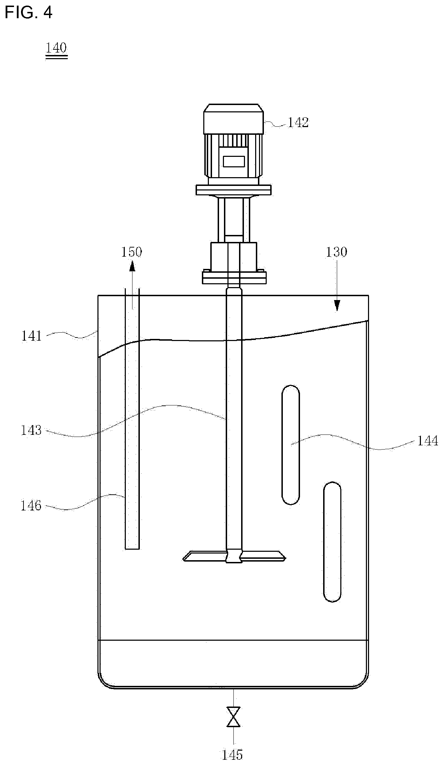

The gel supply unit 140 receives the solvent substitution completed silica gel from the solvent substitution unit 130, discharges water and supplies gel to the drying unit 150, and includes a gel buffer tank 141, a stirring machine 143 rotating by driving of a motor 142, a checking window 144 for checking the inside of the gel buffer tank 141, a waste liquid discharge pipe 145, a height-adjustable vertical-type gel discharge pipe 146, a transfer pump 147, a flow meter 148, and the like as shown in FIG. 4. A pump (not shown) is connected to the bottom of the gel buffer tank 141 to transfer layer-separated water to a waste liquid tank (not shown) through the waste liquid discharge pipe 145. The height-adjustable vertical-type gel discharge pipe 146 is mounted to stably project waterless gel inside the gel buffer tank 141 into the drying unit 150, the waterless gel is transferred through the transfer pump 147, and the flow meter 148 is mounted to quantify the waterless gel.

Specifically, for operation balancing and simplified process management of the whole process, an internal volume of the gel buffer tank 141 may be produced at least three times larger than that of the mixing tank 121 to store gel for a predetermined time by performing the gelling process and the solvent substitution process even during a drying process and supply the gel for the drying process according to circumstances because a processing time of the drying process in the drying unit 150 takes about 23 times longer than that of the gelling process in the mixing unit 120 and the solvent substitution process in the solvent substitution unit 130. The solvent-substituted gel from which water has been removed may be preserved for a long time without being concerned about self-reaction or deformation of the materials to be reacted. The stirring machine 143 that is capable of stirring at a low speed is mounted to prevent a decrease in fluidity due to layer separation of gel and a solvent due to gravity when the gel is stored for a long time.

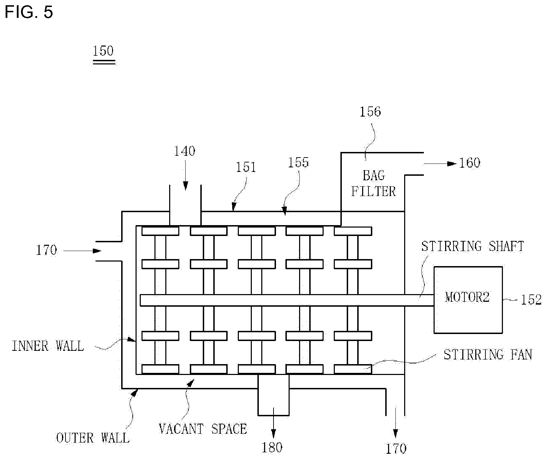

The drying unit 150 generates silica aerogel powder by drying silica gel containing a small amount of water, which is supplied from the gel supply unit 140, and includes a drying tank 151, a stirring machine 153 having a plurality of stirring fans coupled to a stirring shaft that is rotated by driving of a motor 152, a temperature sensor 154 for measuring an internal temperature, a heating device 155 including a thermal heater, a bag filter 156, and the like as shown in FIG. 5. The drying tank 151 has a predetermined vacant space between an inner wall and an outer wall, wherein a thermal oil or hot air is transferred through the vacant space to adjust a temperature of the drying tank 151, and the thermal oil or hot air which has finished a heating function is recollected by the boiler/heater 170 again. In addition, portions of stirring fans contacting the inner surface of the drying tank 151 formed in the drying tank 151 are formed of a Teflon material, and the stirring fans formed of a Teflon material prevent residues from remaining in the drying tank 151 when the silica gel powder is discharged after finishing the drying process.

In the present invention, the bag filter 156 is used so that silica aerogel powder is not included in a process of recollecting the vaporized organic solvent during the drying process. High-pressure air may be periodically injected to the bag filter 156 so that pores of the bag filter 156 are not clogged during the collection of the vaporized organic solvent. The drying unit 150 is connected to the collection unit 180 through a connection pipe, and a tenth valve V10 is mounted in the middle of the connection pipe. The silica aerogel powder generated by the drying unit 150 is transferred to the collection unit 180 by controlling the opening/closing of the tenth valve V10.

The recollection unit 160 recollects the organic solvent vaporized in the mixing unit 120 and the drying unit 150 and includes a condenser 161, a recollection and storage tank 162, a chiller 163, and a vacuum pump 164. The mixing unit 120 and the drying unit 150 are connected to the recollection unit 160 through respective connection pipes, and a fifth valve V15 and a sixth valve V16 are respectively mounted in the middle of the connection pipes. The organic solvent vaporized in the mixing unit 120 is recollected by controlling the opening/closing of the fifth valve V15, and the organic solvent vaporized in the drying unit 150 is recollected by controlling the opening/closing of the sixth valve V16. The condenser 161 liquidizes the vaporized organic solvent, and the recollection and storage tank 162 stores the liquidized organic solvent. The chiller 163 and the vacuum pump 164 are used to adjust temperatures and pressures of the condenser 161 and the recollection and storage tank 162.

The boiler/heater 170 refers to a thermal boiler for transferring thermal oil to the mixing unit 120 and the drying unit 150 and a heater for transferring hot air to the mixing unit 120 and the drying unit 150, and actually uses only one of the thermal boiler and the heater. The gelling process performed by the mixing unit 120 is influenced by a surrounding temperature, and the gelling process and the solvent substitution process may be performed in an atmosphere of about 30°C to about 40°C. The drying process performed by the drying unit 150 is also influenced by a temperature, and the efficiency of the drying process is generally optimum from a room temperature to about 150°C. The temperatures of the mixing unit 120 and the drying unit 150 are respectively set by controlling valves on pipes for thermal oil or hot air, which are connected to the boiler/heater 170. As a method of changing the temperatures of the mixing unit 120 and the drying unit 150, besides the thermal oil and hot air provided by the boiler/heater 170, there is a method of installing an electric heating coil in the mixing tank 121 and the drying tank 151 respectively included in the mixing tank 120 and the drying unit 150.

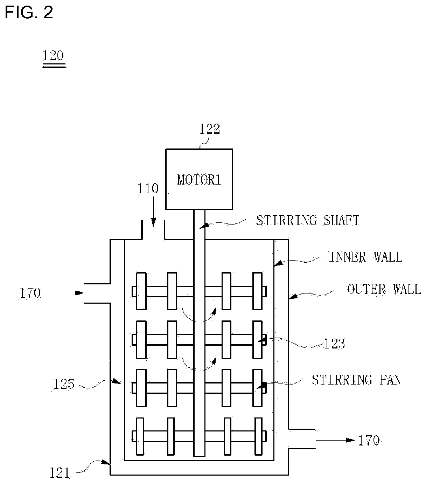

Although not shown in FIGS. 1 to 5, the control unit of the system controls the opening/closing of the plurality of valves. By using a program logic control (PLC) unit or a touch screen, functions of the control unit may be controlled, and a processing result may be confirmed. Although not shown in FIGS. 1 to 5, a compressor for opening/closing the plurality of valves and an ultrapure water manufacturing device for supplying the de-ionized water are also within the scope of the present invention.

## Claims

1. A system for manufacturing silica aerogel powder, the system comprising:
a raw material supply unit for supplying raw materials, the raw materials being de-ionized water, water glass, hexamethyldisilazane (HMDS) as organosilane compound, nitric acid (HNO₃) as inorganic acid and a non-polar organic solvent;
a mixing unit for performing a gelling process by mixing raw materials;
a solvent substitution unit for performing a solvent substitution process;
a gel supply unit for storing water-removed solvent substitution completed silica gel for a predetermined time without being concerned about self-reaction or deformation of materials to be reacted and stably supplying the solvent substitution completed silica gel to a drying unit;
the drying unit for generating silica aerogel powder by performing a drying process;
a collection unit for collecting and obtaining the silica aerogel powder;
a recollection unit for recollecting raw materials vaporized by the mixing unit and the drying unit; and
a thermal boiler or a hot air heater for heating the mixing unit and the drying unit.

2. The system of claim 1, wherein the raw material supply unit comprises:
a first stirring machine for generating a water glass solution by mixing the de-ionized water and the water glass at a predetermined ratio;
a second stirring machine for mixing two or more types of organic solvents when the organic solvents are input;
a first storage tank having a first load cell for measuring an inflow of the organosilane compound; and
a second storage tank having a second load cell for measuring an inflow of the inorganic acid.

3. The system of claim 2, wherein raw materials respectively output from the first stirring machine, the second stirring machine, the first storage tank, and the second storage tank are transferred to the mixing unit according to a predetermined order which is previously set considering chemical reaction stability.

4. The system of claim 1, wherein the raw materials, such as the de-ionized water, the water glass, the organosilane compound, the inorganic acid, and a non-polar organic solvent are transferred to the mixing unit by a diaphragm pump mounted on a corresponding raw material container for each of the raw materials.

5. The system of claim 1, wherein the mixing unit comprises:
a mixing tank;
a stirring machine having a plurality of stirring fans coupled to a stirring shaft driven by a motor; and
a temperature sensor for measuring an internal temperature of the mixing tank.

6. The system of claim 5, wherein the mixing tank has a predetermined space between an inner wall and an outer wall to supply the thermal oil or hot air to the space or has an electric heater inside the mixing tank to heat and maintain a temperature inside the mixing tank.

7. The system of claim 1, wherein the solvent substitution unit comprises:
a solvent substitution reaction tank;
a stirring machine rotating by motor driving;
a gel discharge pipe; and
a transfer pump.

8. The system of claim 7, wherein the solvent substitution reaction tank comprises:
a checking window for checking layer separation of a gel product inside the solvent substitution reaction tank; and
a gel waste liquid discharge pipe for discharging a product as waste to a waste liquid tank when the layer separation is not smoothly achieved.

9. The system of claim 1, wherein the gel supply unit comprises:
a gel buffer tank;
a stirring machine rotating by motor driving;
a gel discharge pipe;
a transfer pump; and
a flow meter.

10. The system of claim 9, wherein the gel buffer tank comprises:
a checking window for checking layer separation of a gel product inside the gel buffer tank; and
a waste liquid discharge pipe for discharging layer-separated water in the lower part of the gel buffer tank as waste to a waste liquid tank.

11. The system of claim 9, wherein the gel buffer tank comprises a height-adjustable vertical-type gel discharge pipe for stably supplying waterless gel to the drying unit.

12. The system of claim 9, wherein the gel buffer tank is produced to have an internal volume that is at least about three times larger than that of the mixing tank.

13. The system of claim 1, wherein the drying unit comprises:
a drying tank;
a stirring machine having a plurality of stirring fans coupled to a stirring shaft driven by a motor;
a temperature sensor for measuring an internal temperature of the drying tank; and
a filter for filtering vaporized partial raw materials.

14. The system of claim 13, wherein the drying tank has a predetermined space between an inner wall and an outer wall to supply the thermal oil or hot air to the space or has an electric heater inside the mixing tank to heat and maintain a temperature inside the drying tank.

15. The system of claim 13, wherein a portion where the stirring fans and the drying tank contact each other is made of a Teflon material.

16. The system of claim 1, wherein the recollection unit comprises:
a condenser for liquidizing a vaporized raw material; and
a storage tank for storing the liquidized raw material,
the vaporized raw material being the non-polar organic solvent.

17. The system of claim 16, wherein the recollection unit further comprises:
the condenser;
the storage tank;
a chiller; and
a vacuum pump.

18. The system of claim 1, wherein at least one connection pipe is connected between the raw material supply unit and the mixing unit, between the mixing unit and the solvent substitution unit, between the solvent substitution unit and the gel supply unit, between the gel supply unit and the drying unit, between the mixing unit and the recollection unit, between the drying unit and the recollection unit, and between the drying unit and the collection unit, and each of the at least one connection pipe is open/closed by at least one valve.

19. The system of claim 1, wherein at least one connection pipe is connected between the mixing unit and the thermal boiler and between the drying unit and the thermal boiler, or between the mixing unit and the hot air heater and between the drying unit and the hot air heater, and each of the at least one connection pipe is open/closed by at least one valve.

20. A method of manufacturing silica aerogel powder by using de-ionized water, water glass, hexamethyldisilazane (HMDS) as organosilane compound, nitric acid (HNO₃) as inorganic acid, and a non-polar organic solvent as raw materials, the method comprising:
a raw material supplying operation of supplying each of the materials to a mixing unit via a stirring machine or directly according to a preset amount and order by using a diaphragm pump of each of raw material tanks;
a gelling operation of generating silica hydrogel in a gelling process by mixing the raw materials supplied from a raw material supply unit;
a solvent substituting operation of solvent-substituting the silica hydrogel supplied from the mixing unit;
a gel storing and supplying operation of receiving the water-removed solvent substitution completed gel, discharging water, and storing the gel for a predetermined time without being concerned about self-reaction or deformation of materials to be reacted or supplying the gel to a drying unit;
a drying operation of receiving the gel and generating silica aerogel;
a collecting operation of collecting the silica aerogel; and
an organic solvent recollecting operation of recollecting the organic solvent from raw materials vaporized by the mixing unit and the drying unit.

## Patentansprüche

1. System zur Herstellung von Silica-Aerogelpulver, wobei das System umfasst:
eine Rohstoff-Zuführungseinheit zum Zuführen von Rohstoffen, wobei es sich bei den Rohstoffen um deionisiertes Wasser, Wasserglas, Hexamethyldisilazan (HMDS) als Organosilanverbindung, Salpetersäure (HNO₃) als anorganische Säure und ein unpolares organisches Lösungsmittel handelt;
eine Mischeinheit zur Durchführung eines Geliervorgangs durch Mischen von Rohstoffen;
eine Lösungsmittelersatzeinheit zur Durchführung eines Lösungsmittelersatzvorga ngs;
eine Gelzuführungseinheit zur Aufbewahrung von Silicagel, aus dem das Wasser entfernt wurde und bei dem der Lösungsmittelersatz beendet ist, während einer vorbestimmten Zeit, ohne dass eine Selbstreaktion oder eine Verformung von umzusetzenden Stoffen zu befürchten sind, und stabiles Zuführen des Silicagels, bei dem der Lösungsmittelersatz beendet ist, zu einer Trocknungseinheit;
die Trocknungseinheit zum Erzeugen von Silica-Aerogelpulver durch Durchführen eines Trocknungsvorgangs;
eine Sammeleinheit zum Auffangen und Gewinnen des Silica-Aerogelpulvers;
eine Rückgewinnungseinheit zum Rückgewinnen von Rohstoffen, die von der Mischeinheit und der Trocknungseinheit verdampft wurden; und
einen Wärmeboiler oder Heißlufterhitzer zum Erhitzen der Mischeinheit und der Trocknungseinheit.

2. System gemäß Anspruch 1, wobei die Rohstoff-Zuführungseinheit umfasst:
eine erste Rührmaschine zum Erzeugen einer Wasserglaslösung durch Mischen des deionisierten Wassers und des Wasserglases in einem vorbestimmten Verhältnis;
eine zweite Rührmaschine zum Mischen von zwei oder mehr Arten von organischen Lösungsmitteln, wenn die organischen Lösungsmittel eingegeben werden;
einen ersten Lagertank mit einer ersten Wägezelle zur Messung des Einstroms der Organosilanverbindung; und
einen zweiten Lagertank mit einer zweiten Wägezelle zur Messung des Einstroms der anorganischen Säure.

3. System gemäß Anspruch 2, wobei Rohstoffe, die jeweils aus der ersten Mischmaschine, der zweiten Mischmaschine, dem ersten Lagertank und dem zweiten Lagertank ausgegeben werden, gemäß einer vorbestimmten Reihenfolge, die unter Berücksichtigung der chemischen Reaktionsstabilität vorher festgelegt wird, in die Mischeinheit übergeführt werden.

4. System gemäß Anspruch 1, wobei die Rohstoffe, wie das deionisierte Wasser, das Wasserglas, die Organosilanverbindung, die anorganische Säure und ein unpolares organisches Lösungsmittel, durch eine Membranpumpe, die für jeden der Rohstoffe auf einem entsprechenden Rohstoffbehälter montiert ist, in die Mischeinheit übergeführt werden.

5. System gemäß Anspruch 1, wobei die Mischeinheit umfasst:
einen Mischtank;
eine Rührmaschine mit einer Vielzahl von Rührpropellern, die an eine durch einen Motor angetriebene Rührwelle gekoppelt sind; und
einen Temperatursensor zum Messen einer Innentemperatur des Mischtanks.

6. System gemäß Anspruch 5, wobei der Mischtank einen vorbestimmten Zwischenraum zwischen einer Innenwand und einer Außenwand aufweist, um das thermische Öl oder heiße Luft in den Zwischenraum zuzuführen, oder ein elektrisches Heizgerät innerhalb des Mischtanks aufweist, um den Mischtank zu erhitzen und die Temperatur darin aufrechtzuerhalten.

7. System gemäß Anspruch 1, wobei die Lösungsmittelersatzeinheit umfasst:
einen Lösungsmittelersatzreaktionstank;
eine Rührmaschine, die sich durch Motorantrieb dreht;
eine Gelaustragungsleitung; und
eine Überführungspumpe.

8. System gemäß Anspruch 7, wobei der Lösungsmittelersatzreaktionstank umfasst:
ein Überprüfungsfenster zum Überprüfen der Schichttrennung eines Gelprodukts innerhalb des Lösungsmittelersatzreaktionstanks; und
eine Gelabfallflüssigkeitsaustragungsleitung zum Austragen eines Produkts als Abfall in einen Abfallflüssigkeitstank, wenn die Schichttrennung nicht glatt erreicht ist.

9. System gemäß Anspruch 1, wobei die Gelzuführungseinheit umfasst:
einen Gelpuffertank;
eine Rührmaschine, die sich durch Motorantrieb dreht;
eine Gelaustragungsleitung;
eine Überführungspumpe; und
ein Durchflussmessgerät.

10. System gemäß Anspruch 9, wobei der Gelpuffertank umfasst:
ein Überprüfungsfenster zum Überprüfen der Schichttrennung eines Gelprodukts innerhalb des Gelpuffertanks; und
eine Abfallflüssigkeitsaustragungsleitung zum Austragen von schichtgetrenntem Wasser im unteren Teil des Gelpuffertanks als Abfall in einen Abfallflüssigkeitstank.

11. System gemäß Anspruch 9, wobei der Gelpuffertank eine höhenverstellbare Gelaustragungsleitung des vertikalen Typs umfasst, um wasserfreies Gel stabil zur Trocknungseinheit zuzuführen.

12. System gemäß Anspruch 9, wobei der Gelpuffertank so hergestellt wird, dass er ein Innenvolumen aufweist, das wenigstens etwa dreimal so groß ist wie das des Mischtanks.

13. System gemäß Anspruch 1, wobei die Trocknungseinheit umfasst:
einen Trocknungstank;
eine Rührmaschine mit einer Vielzahl von Rührpropellern, die an eine durch einen Motor angetriebene Rührwelle gekoppelt sind;
einen Temperatursensor zum Messen einer Innentemperatur des Trocknungstanks; und
einen Filter zum Filtern von verdampften partiellen Rohstoffen.

14. System gemäß Anspruch 13, wobei der Trocknungstank einen vorbestimmten Zwischenraum zwischen einer Innenwand und einer Außenwand aufweist, um das thermische Öl oder heiße Luft in den Zwischenraum zuzuführen, oder ein elektrisches Heizgerät innerhalb des Mischtanks aufweist, um den Trocknungstank zu erhitzen und die Temperatur darin aufrechtzuerhalten.

15. System gemäß Anspruch 13, wobei ein Teil, wo die Rührpropeller und der Trocknungstank miteinander in Kontakt kommen, aus einem Teflonmaterial besteht.

16. System gemäß Anspruch 1, wobei die Rückgewinnungseinheit umfasst:
einen Kühler zur Verflüssigung eines verdampften Rohstoffs; und
einen Lagertank zur Aufbewahrung des verflüssigten Rohstoffs;
wobei es sich bei dem verdampften Rohstoff um das unpolare organische Lösungsmittel handelt.

17. System gemäß Anspruch 16, wobei die Rückgewinnungseinheit weiterhin umfasst:
den Kühler;
den Lagertank;
ein Kühlgerät; und
eine Vakuumpumpe.

18. System gemäß Anspruch 1, wobei sich wenigstens eine Verbindungsleitung zwischen der Rohstoff-Zuführungseinheit und der Mischeinheit, zwischen der Mischeinheit und der Lösungsmittelersatzeinheit, zwischen der Lösungsmittelersatzeinheit und der Gelzuführungseinheit, zwischen der Gelzuführungseinheit und der Trocknungseinheit, zwischen der Mischeinheit und der Rückgewinnungseinheit, zwischen der Trocknungseinheit und der Rückgewinnungseinheit und zwischen der Trocknungseinheit und der Sammeleinheit befindet und jede der wenigstens einen Verbindungsleitung durch wenigstens ein Ventil geöffnet/geschlossen wird.

19. System gemäß Anspruch 1, wobei sich wenigstens eine Verbindungsleitung zwischen der Mischeinheit und dem Wärmeboiler und zwischen der Trocknungseinheit und dem Wärmeboiler oder zwischen der Mischeinheit und dem Heißlufterhitzer und zwischen der Trocknungseinheit und dem Heißlufterhitzer befindet und jede der wenigstens einen Verbindungsleitung durch wenigstens ein Ventil geöffnet/geschlossen wird.

20. Verfahren zur Herstellung von Silica-Aerogelpulver unter Verwendung von deionisiertem Wasser, Wasserglas, Hexamethyldisilazan (HMDS) als Organosilanverbindung, Salpetersäure (HNO₃) als anorganische Säure und eines unpolaren organischen Lösungsmittels als Rohstoffe, wobei das Verfahren umfasst:
einen Rohstoff-Zuführungsschritt zum Zuführen jedes der Stoffe zu einer Mischeinheit über eine Rührmaschine oder direkt gemäß einer vorbestimmten Menge und Reihenfolge unter Verwendung einer Membranpumpe von jedem der Rohstofftanks;
einen Gelierschritt zum Erzeugen eines Silica-Hydrogels in einem Geliervorgang durch Mischen der von einer Rohstoff-Zuführungseinheit zugeführten Rohstoffe;
einen Lösungsmittelersetzungsschritt zum Ersetzen des Lösungsmittels in dem von der Mischeinheit zugeführten Hydrogel;
einen Gelaufbewahrungs- und -zuführungsschritt zum Aufnehmen des Gels, aus dem das Wasser entfernt wurde und bei dem der Lösungsmittelersatz beendet ist, Ableiten des Wassers und Aufbewahren des Gels während einer vorbestimmten Zeit, ohne dass eine Selbstreaktion oder eine Verformung von umzusetzenden Stoffen zu befürchten sind, oder Zuführen des Gels zu einer Trocknungseinheit;
einen Trocknungsschritt zum Aufnehmen des Gels und Erzeugen von Silica-Aerogel;
einen Sammelschritt zum Auffangen des Silica-Aerogels; und
einen organisches-Lösungsmittel-Rückgewinnungsschritt zum Rückgewinnen des organischen Lösungsmittels aus Rohstoffen, die von der Mischeinheit und der Trocknungseinheit verdampft wurden.

## Revendications

1. Système de fabrication d'une poudre d'aérogel de silice, le système comprenant :
une unité d'approvisionnement de matière première pour fournir des matières premières, lesdites matières premières étant de l'eau désionisée, du verre soluble, de l'hexaméthyldisilazane (HMDS) comme composé organosilane, de l'acide nitrique (HNO₃) comme acide inorganique, et un solvant organique non polaire,
une unité de mélange pour effectuer un processus de gélification en mélangeant des matières premières,
une unité de substitution de solvant pour effectuer un processus de substitution de solvant,
une unité d'approvisionnement de gel pour stocker le gel de silice dépourvu d'eau et ayant subi une substitution de solvant complète pendant un temps prédéterminé sans être préoccupé par une autoréaction ou déformation de matériaux à faire réagir, et fournir le gel de silice ayant subi une substitution de solvant complète stablement dans une unité de séchage,
l'unité de séchage pour produire une poudre d'aérogel de silice en effectuant un processus de séchage,
une unité collectrice pour recueillir et obtenir la poudre d'aérogel de silice,
une unité de récupération pour récupérer des matières premières évaporées par l'unité de mélange et l'unité de séchage, et
une chaudière thermique ou un réchauffeur à air chaud pour réchauffer l'unité de mélange et l'unité de séchage.

2. Système selon la revendication 1, dans lequel ladite unité d'approvisionnement de matière première comprend :
un premier dispositif d'agitation pour produire une solution de verre soluble en mélangeant l'eau désionisée et le verre soluble en un rapport prédéterminé,
un second dispositif d'agitation pour mélanger deux ou plusieurs types de solvants organiques quand les solvants organiques sont introduits,
un premier réservoir de stockage ayant une première cellule de charge pour mesurer le taux d'afflux du composé organosilane, et
un second réservoir de stockage ayant une seconde cellule de charge pour mesurer le taux d'afflux de l'acide inorganique.

3. Système selon la revendication 2, dans lequel des matières premières respectivement sorties du premier dispositif d'agitation, du second dispositif d'agitation, du premier réservoir de stockage et du second réservoir de stockage sont transférées dans l'unité de mélange selon un ordre prédéterminé qui est établi en avance en tenant compte de la stabilité de réaction chimique.

4. Système selon la revendication 1, dans lequel les matières premières, comme l'eau désionisée, le verre soluble, le composé organosilane, l'acide inorganique et un solvant organique non polaire, sont transférées dans l'unité de mélange par une pompe à membrane installée sur un récipient de matière première correspondant pour chacune des matières premières.

5. Système selon la revendication 1, dans lequel l'unité de mélange comprend :
un réservoir de mélange,
un dispositif d'agitation ayant une pluralité d'hélices agitatrices couplées à un arbre d'agitation entraîné par un moteur, et
un capteur de température pour mesurer une température interne du réservoir de mélange.

6. Système selon la revendication 5, dans lequel le réservoir de mélange présente un espace prédéterminé entre une parois intérieure et une parois extérieure pour fournir l'huile thermique ou de l'air chaud dans l'espace, ou présente un chauffage électrique à l'intérieur du réservoir de mélange pour chauffer et maintenir une température à l'intérieur du réservoir de mélange.

7. Système selon la revendication 1, dans lequel l'unité de substitution de solvant comprend :
un réservoir de réaction de substitution de solvant,
un dispositif d'agitation tournant par entraînement par moteur,
une conduite d'évacuation de gel, et
une pompe de transfert.

8. Système selon la revendication 7, dans lequel le réservoir de réaction de substitution de solvant comprend :
une fenêtre de contrôle pour contrôler la séparation de couches d'un produit de gel à l'intérieur du réservoir de réaction de substitution de solvant, et
une conduite d'évacuation de liquide de déchets de gel pour déverser un produit comme déchet dans un réservoir de liquide de déchet lorsque la séparation de couches n'est pas achevée sans encombre.

9. Système selon la revendication 1, dans lequel l'unité d'approvisionnement de gel comprend :
un réservoir de tamponnage de gel,
un dispositif d'agitation tournant par entraînement par moteur,
une conduite d'évacuation de gel,
une pompe de transfert, et
un débimètre.

10. Système selon la revendication 9, dans lequel le réservoir de tamponnage de gel comprend :
une fenêtre de contrôle pour contrôler la séparation de couches d'un produit de gel à l'intérieur du réservoir de tamponnage de gel, et
une conduite d'évacuation de liquide de déchets pour déverser de l'eau à couches séparées dans la partie inférieure du réservoir de tamponnage de gel comme déchet dans un réservoir de liquide de déchet.

11. Système selon la revendication 9, dans lequel le réservoir de tamponnage de gel comprend une conduite d'évacuation de type vertical réglable en hauteur pour fournir du gel anhydre stablement dans l'unité de séchage.

12. Système selon la revendication 9, dans lequel le réservoir de tamponnage de gel est fabriqué pour avoir un volume interne qui est au moins environ trois fois supérieur à celui du réservoir de mélange.

13. Système selon la revendication 1, dans lequel l'unité de séchage comprend :
un réservoir de séchage,
un dispositif d'agitation ayant une pluralité d'hélices agitatrices couplées à un arbre d'agitation entraîné par un moteur,
un capteur de température pour mesurer une température interne du réservoir de mélange, et
un filtre pour filtrer des matières premières partielles évaporées.

14. Système selon la revendication 13, dans lequel le réservoir de séchage présente un espace prédéterminé entre une parois intérieure et une parois extérieure pour fournir l'huile thermique ou de l'air chaud dans l'espace, ou présente un chauffage électrique à l'intérieur du réservoir de mélange pour chauffer et maintenir une température à l'intérieur du réservoir de séchage.

15. Système selon la revendication 13, dans lequel une partie où les hélices agitatrices et le réservoir de séchage se contactent est en un matériau de Téflon.

16. Système selon la revendication 1, dans lequel l'unité de récupération comprend :
un condenseur pour liquéfier une matière première évaporée, et
un réservoir de stockage pour stocker la matière première évaporée,
la matière première évaporée étant le solvant organique non polaire.

17. Système selon la revendication 16, dans lequel l'unité de récupération comprend en outre :
le condenseur,
le réservoir de stockage,
un refroidisseur, et
une pompe à vide.

18. Système selon la revendication 1, dans lequel au moins un tube de raccordement raccorde l'unité d'approvisionnement de matière première avec l'unité de mélange, l'unité de mélange avec l'unité de substitution de solvant, l'unité de substitution de solvant avec l'unité d'approvisionnement de gel, l'unité d'approvisionnement de gel avec l'unité de séchage, l'unité de mélange avec l'unité de récupération, l'unité de séchage avec l'unité de récupération, et l'unité de séchage avec l'unité collectrice, et chacun parmi les au moins un tube de raccordement est ouvert/fermé par au moins une soupape.

19. Système selon la revendication 1, dans lequel au moins un tube de raccordement raccorde l'unité de mélange avec la chaudière thermique et l'unité de séchage avec la chaudière thermique, ou l'unité de mélange avec le réchauffeur à air chaud et l'unité de séchage avec le réchauffeur à air chaud, et chacun parmi les au moins un tube de raccordement est ouvert/fermé par au moins une soupape.

20. Procédé pour la fabrication d'une poudre d'aérogel de silice en utilisant de l'eau désionisée, du verre soluble, de l'hexaméthyldisilazane (HMDS) comme composé organosilane, de l'acide nitrique (HNO₃) comme acide inorganique, et un solvant organique non polaire comme matières premières, ledit procédé comprenant :
une étape d'approvisionnement de matière première pour fournir chacune des matières dans une unité de mélange à travers un dispositif d'agitation ou directement selon une quantité prédéterminée et selon un ordre prédéterminé en utilisant une pompe à membrane de chacun des réservoirs de matière première,
une étape de gélification pour produire de l'hydrogel de silice dans un processus de gélification en mélangeant les matières premières fournies d'une unité d'approvisionnement de matière première,
une étape de substitution de solvant pour substituer le solvant dans l'hydrogel de silice fourni à partir de l'unité de mélange,
une étape de stockage et approvisionnement de gel pour recevoir le gel dépourvu d'eau et ayant subi une substitution de solvant complète, et stocker le gel pendant un temps prédéterminé sans être préoccupé par une autoréaction ou déformation de matériaux à faire réagir, ou fournir le gel dans une unité de séchage,
une étape de séchage pour recevoir le gel et produire de l'aérogel de silice,
une étape de collection pour recueillir l'aérogel de silice, et
une étape de récupération de solvant organique pour récupérer le solvant organique à partir de matières premières évaporées par l'unité de mélange et l'unité de séchage.
